# EUROPEAN PATENT SPECIFICATION

(11) **EP 1 793 978 B1**
(45) Date of publication and mention of the grant of the patent: **29.07.2009**
(21) Application number: 05793547.0
(22) Date of filing: 30.09.2005
(51) Int. Cl.: B29C 65/34, F16L 47/03

(54) **TOOL FOR ELECTRIC WELDING OF SOCKET AND PIPE**
ELEKTROSCHWEISSWERKZEUG FÜR MUFFE UND ROHR
OUTIL DE SOUDAGE ELECTRIQUE D'UN EMBOITEMENT ET D'UN TUYAU

(30) Priority: 01.10.2004 FI 20041281
(43) Date of publication of application: 13.06.2007
(73) Proprietor: Oy KWH Pipe AB, 65370 Vasa (FI)
(72) Inventor: ROLIN, Jan, FI-10300 KARIS (FI); KULLAS, Tom, FI-65630 KARPARÖ (FI)
(74) Representative: Sundman, Patrik Christoffer
(86) International application number: PCT/FI2005/050339
(87) International publication number: WO 2006/037856

(56) References cited:
- EP-B1- 0 201 479
- EP-B1- 0 888 513

## Description

The present invention refers to a tool for electric welding i.e. electro fusion of socket or sleeve and pipe of weldable plastics comprising a clamping tool for pressing an axially slotted socket or sleeve around a pipe surrounded by a welding thread conducting electricity, which welding thread is arranged to supply welding heat to the plastics material, whereby the clamping tool is provided with a flexible clamping strap intended to be led as a loop around said sleeve and having one end rigidly attached to a bridge movably mounted in the frame of the tool, and the other end of which being attachable to the same bridge by means of a locking mechanism allowing the clamping strap to move freely in one direction for adjusting the length of the loop to the periphery of the sleeve and locking the movement of the clamping strap in reverse direction in order to enable generation of a tension force in the loop, when said bridge by means of a tension bolt acting between the frame of the tool and the bridge, is arranged to be moved in a direction radially away from the socket or sleeve simultaneously as the tool rests against said sleeve.

From the publication EP 0 888 513 B1 an above described tool is known. This previously known tool is however unnecessarily complicated concerning both construction and the way to be use. The bottom part of the frame is provided with a concave supportive surface intended to be in contact with outer surface of the sleeve over lapping the axial slot in the sleeve. If the tool is intended to be used for pipes and sleeves of different dimensions the piece with said supportive surface has to be replaceable, requiring a lot of extra equipment to be brought together with said tool in order to be able to carry out an installation work. Two guide rollers are rotatably mounted at the ends of a transversal rod attached to the frame of the tool at a distance from the supportive surface of the tool. In order to enable electric contact between the conductive welding thread and an electric source the supportive surface have to be provided with electrode elements, because the supportive surface completely covers the slot through which the ends of the welding thread leave the sleeve. This leads to an unnecessary complicated construction of the supportive surface, which have to be manufactured from an electrically insulating material.

When the supportive surface is in contact with the outer wall surface of the sleeve it will resist displacement of the side walls of the sleeve towards each other when the clamping strap is braced around the sleeve, resulting in that an uniform tensioning force cannot be achieved between the pipe and the sleeve around the whole periphery of the sleeve. In order to avoid shortcircuit between both ends of the welding thread, comprising a woven metal band, the supportive surface of the tool should further be provided with a protrusion arranged to force into the slot in the sleeve and thus to keep both ends of the welding thread away from each other.

The bridge intended to strain the clamping strap around the sleeve is positioned at the top of the tool and is actuated by a tension bolt of a double threaded type, wherein the threads at the lower part of the tension bolt cooperate with the threads in a central bore in the frame of the tool and the threads at the upper part of the bolt run in a reverse direction and are arranged to cooperate with the threads in a through bore in said bridge, which bridge is prevented from turning with respect to the frame of the tool. A disadvantage with such an arrangement is besides a complicated construction that a major part of the bolt is completely unprotected and exposed to environmental fouling.

Another detail which complicates handling of the tool to some extent is its locking mechanism having a manually operated eccentric for locking the movement of clamping strap in a direction towards the loop led around the sleeve.

The object of present invention is to eliminate the above mention problems, which is achieved with a tool characterized in that the tool lowest at the bottom of the frame is provided with two support rolls remote from each other, between which rolls said clamping strap is led and which support rolls are arranged to be in contact with the sleeve at each side of the axially extending slot of said sleeve during the electro fusion operation. This results in a considerably more simple construction suitable for electro fusion of pipes and sleeves of various sizes without replacing any part of the tool. Because no part of the tool covers the axially extending slot in the sleeve there is no need to provide the tool with extra electrode elements because the ends of the welding thread can be connected directly to an electric source.

By using a welding thread covered with plastics the risk of a shortcircuit between both ends of the welding thread will decrease at the point they exit through the slot in the sleeve. By means of the plastics cover of the welding thread also an additional supply of plastics material to the intended weld seam between pipe an sleeve is achieved.

The support rolls of the tool are suitably carried in bearings in the lower corners of the frame resulting in a stable contact to the sleeve during a welding process. Possibly the tool can be provided with double rolls in each corner, which further increase the stability.

By having the tension bolt threaded in the frame and mounted turnable in the bridge, a turning of the tension bolt clockwise or counter clockwise will result in a movement upwards or downwards of the bridge along the frame, resulting in a straining or loosening of the clamping strap. The frame will then act as a guide for the bridge and prevents a turning of the same. Alternatively the tension bolt may be mounted turnable in the frame and threaded in the bridge.

According to a preferred embodiment the locking mechanism in the bridge of the tool comprises an upwardly tapering wedge-shaped body arranged as an integrated part of the bridge, which body cooperates with a downwardly tapering wedge-shaped body positioned above said first body and mounted vertically spring-loaded to the bridge, between which wedge-shaped bodies the clamping strap is led. Due to the spring-load of the downwardly tapering wedge-shaped body said wedge-shaped bodies are strongly pressed against each other and lock the clamping strap between themselves, when a pulling force acts at the clamping strap downwardly. When the clamping strap is pulled upwardly the spring-loaded wedge-shaped body will simultaneously be drawn away from the stationary wedge-shaped body of the bridge, whereby the clamping strap is freed so that it can be freely pulled upwardly for instance in order to prestress the clamping strap around a sleeve.

In order to facilitate freeing of the clamping strap, after a finished electro fusion operation, when a remarkable tensional force has been produced in the clamping strap by means of the tension bolt, a knob has been arranged at a suitable level at the frame, vertically below the spring-loaded wedge-shaped body, against which knob this wedge-shaped body is arranged to hit, when the bridge by means of the tension bolt is moved downwardly. This results in that said spring-loaded wedge-shaped body is pressed upwardly and is drawn away from the stationary wedge-shaped body of the bridge, whereby the clamping strap is freed and can be freely moved in both directions.

The invention will below be described in more detail with reference to the enclosed drawing, wherein
Fig. 1 shows a schematic side view of a tool according to the invention applied around a pipe joint,
Fig. 2a shows schematically a cut through a preferred locking mechanism according to the invention, in locked position and
Fig. 2b shows the locking mechanism in open position.

The tool according to the invention for electro fusion of sleeve 2 and pipe 1 comprises a frame 8, the lower corners of which carrying two support rolls 6 in bearings, by means of which support rolls the tool is intended to support against the mantle surface of the sleeve 2, which is intended to welded around a pipe 1. In the frame 8 a bridge 4 is mounted, which bridge by means of a tension bolt 7 is movable in a radial direction to the pipe 1. The tension bolt 7 is preferably threaded in the frame 8 and turnably mounted in the bridge 4 so that the tension bolt 7 and the bridge 4 on turning the tension bolt 7 in either direction are moved away from the pipe 1 and sleeve2 and towards the pipe 1 and the sleeve 2, respectively. In order to achieve a weld seam between pipe 1 and sleeve 2, a welding thread 9 conducting electricity and covered by plastics is placed around the pipe 1 in the position where the weld joint is intended to be produced.

In order to get a desired welding pressure between the pipe and the sleeve2 a clamping strap 3 is led in a loop around the sleeve 2. The sleeve 2 is axially slotted in order to enable the sleeve to be applied around a joint at a continuous pipe line. One end of the clamping strap 3 is stationary fixed to the bridge 4 at one side of the tension bolt 7 while the other end is led through an automatically operating locking mechanism 5 in the bridge 4 at the other side of the tension bolt 7. The locking mechanism 5 is arranged to allow the clamping strap 3 to move freely in a direction generating straining of the clamping strap 3 around the sleeve 2 on pulling the free end of the clamping strap 3 protruding from the tool. When pulling of the clamping strap 3 is interrupted the clamping strap 3 tends to shrink to some extent, which automatically results in closing of the locking mechanism 5 and locking of the clamping strap 3, after which a desired welding pressure can be achieved between the sleeve 2 and the pipe 1 by turning the tension both 7 so that the bridge 4 will move away from pipe 1 and sleeve 2.

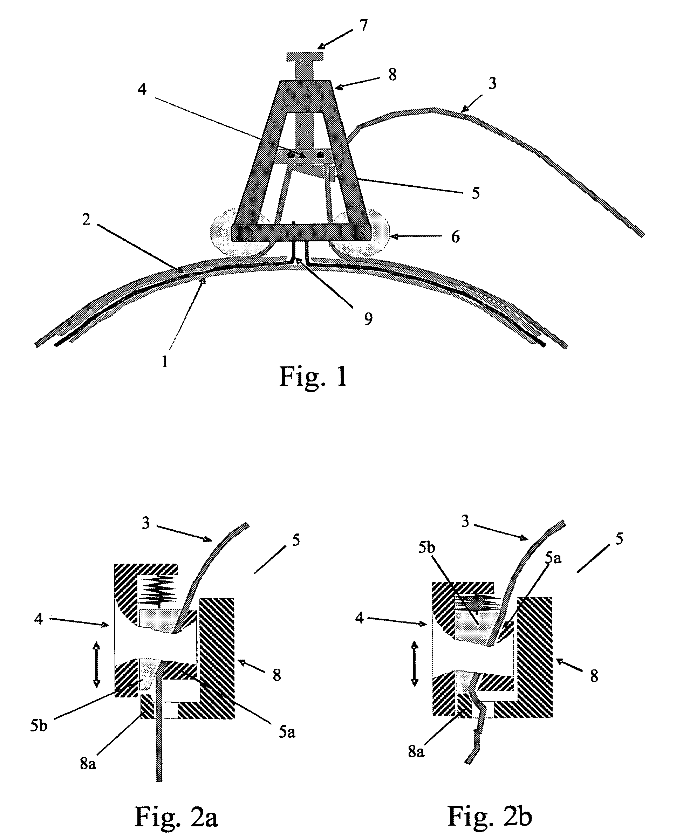

In figures 2a and 2b a preferred embodiment of the locking mechanism is shown. This locking mechanism 5 comprises an upwardly tapering wedge-shaped body 5a arranged as an integrated part of the bridge 4, which body cooperates with a downwardly tapering wedge-shaped body 5b mounted spring-loaded to the bridge, which wedge-shaped bodies 5a, 5b are pressed against each other by means of the spring load, and lock the clamping strap 3 between themselves, when a tension force acts at the clamping strap 3 between the sleeve 2 and the locking mechanism 5, enabling generation of a desired welding pressure between the sleeve 2 and the pipe by moving the bridge 4 by means of the tension bolt 7 away from said sleeve and pipe. When a pulling force acts at the clamping strap 3 in opposed direction the spring loaded wedge-shaped body 5b will be moved upwardly and is drawn away from the stationary upwardly tapering wedge-shaped body 5a, and allows free movement of the clamping strap in said direction.

In order to free the clamping strap 3 after a finished welding process the tension bolt 7 is screwed in reverse direction so that the bridge 4 is moved towards the sleeve 2 and the pipe 1 whereby a knob 8a is arranged at a suitable level of the frame 8, vertically below the spring loaded wedge-shaped body 5b, against which knob the spring-loaded wedge-shaped body 5b hits and is pressed upwardly and away from the stationary wedge-shaped body 5a, when the bridge is moved further downwards along the frame 8. Hereby the clamping strap 3 is freed so that it can be freely pulled in both directions and if necessary be totally pulled out of the locking mechanism 5.

Due to the fact that the axial slot in the sleeve 2 is not covered by any part of the tool when exerting a welding pressure at the sleeve 2, no electrode elements are required in the tool, but the ends of the welding thread 9 led around the pipe 1 can be connected directly to an electric source. Another advantage is that the tool does not prevent a peripheral movement of those parts of the sleeve, which are positioned next to the axial slot.

## Claims

1. Tool for electro fusion of a sleeve (2) and a pipe (1) of weldable plastics comprising a clamping tool for pressing an axially slotted sleeve (2) around a pipe (1) surrounded by a welding thread (9) conducting electricity, which welding thread (9) is arranged to supply welding heat to the plastics material, whereby the clamping tool is provided with a flexible clamping strap (3) intended to be led as a loop around said sleeve (2) and having one end rigidly attached to a bridge (4) movably mounted in the frame of the tool, and the other end of which being attachable to the same bridge (4) by means of a locking mechanism (5) allowing the clamping strap (3) to move freely in one direction for adjusting the length of the loop to the periphery of the sleeve (2) and locking the movement of the clamping strap (3) in reverse direction in order to enable generation of a tension force in the loop, when said bridge (4) by means of a tension bolt (7) acting between the frame (8) of the tool and the bridge (4), is arranged to be moved in a direction radially away from the sleeve (2)simultaneously as the tool rests against said sleeve (2), **characterized in that** the tool lowest at the bottom of the frame (8) is provided with two support rolls (6) remote from each other, between which rolls said clamping strap (3) is led and which support rolls (6) are arranged to be in contact with the sleeve (2) at each side of the axially extending slot of said sleeve (2) during the electro fusion operation.

2. Tool according to claim 1, **characterized in that** the electric welding thread (9) is covered with plastics.

3. Tool according to claim 1, **characterized in that** the support rolls (6) are carried in bearings in the lower corners of the frame (8).

4. Tool according to any of the previous claims, **characterized in that** the tension bolt (7) is threaded in the frame (8) and mounted turnable in the bridge (4), which on turning the tension bolt (7) is arranged to be moved along the frame (8) and to be guided by it.

5. Tool according to any of claims 1 to 3, **characterized in that** the tension bolt (7) is mounted turnable in the frame (8) and threaded in the bridge (4), which on turning the tension bolt (7) is arranged to be moved along the frame (8) and to be guided by it.

6. Tool according to any of the previous claims, **characterized in that** the ends of the electric welding thread (9) leave the sleeve (2) through the slot in said sleeve (2) and are arranged to be connected directly to an electric source.

7. Tool according to any of the previous claims, **characterized in that** the locking mechanism (5) comprises an upwardly tapering wedge-shaped body (5a) arranged as an integrated part of the bridge (4), which body (5a) cooperates with a downwardly tapering wedge-shaped body (5b) mounted spring-loaded to the bridge (4), which wedge-shaped bodies (5a, 5b) are pressed against each other and lock the clamping strap 3 between themselves.

8. Tool according to claim 7, **characterized in that** a knob (8a) is arranged vertically below the spring loaded wedge-shaped body (5b), with which knob (8a) said spring-loaded wedge-shaped body (5b) is arranged to come into contact, when the bridge (4) is moved downwards by means of the tension bolt (7), whereby the wedge-shaped bodies (5a,5b) are pushed away from each other and the clamping strap (3) is freed.

## Patentansprüche

1. Werkzeug zum Elektroschmelzen einer Hülse (2) und eines Rohres (1) aus schweißbaren Kunststoffen, umfassend ein Klemmwerkzeug zum axialen Pressen einer geschlitzten Hülse (2) um ein Rohr (1), welches von einem elektrisch leitfähigen Schweißgewinde (9) umgeben ist, wobei das Schweißgewinde (9) zur Zufuhr von Schweißwärme zu dem Kunststoffmaterial angeordnet ist, wobei das Klemmwerkzeug mit einem flexiblen Klemmstreifen (3) ausgestattet ist, welcher gedacht ist, um als eine Schlaufe um die Hülse (2) gelegt zu werden, wobei ein Ende starr an einer Brücke (4) befestigt ist, welche beweglich in dem Rahmen des Werkzeugs befestigt ist, und wobei das andere Ende davon an derselben Brücke (4) mittels eines Verschlussmechanismus (5) befestigbar ist, welcher dem Klemmstreifen (3) erlaubt, sich in einer Richtung frei zu bewegen, um die Länge der Schlaufe zur Peripherie der Hülse (2) einzustellen, und die Bewegung des Klemmstreifens (3) in der entgegengesetzten Richtung zu sperren, um das Erzeugen einer Zugkraft in der Schlaufe zu ermöglichen, wenn die Brücke (4) mittels eines Zugbolzens (7) zwischen den Rahmen (8) des Werkzeugs und der Brücke (4) wirkt, und angeordnet ist, um in einer radialen Richtung weg von der Hülse (2) simultan bewegt zu werden, wenn sich das Werkzeug gegen die Hülse (2) abstützt, **dadurch gekennzeichnet, dass** das unterste Werkzeug am Boden des Rahmens (8) mit zwei Unterstützungsrollen (6) ausgestattet ist, die voneinander entfernt sind, wobei der Klemmstreifen (3) zwischen den Rollen geführt ist, und wobei die Unterstützungsrollen (6) so angeordnet sind, dass sie in Kontakt mit der Hülse (2) an jeder Seite des sich axial erstreckenden Schlitzes der Hülse (2) während des Elektro-Schmelzverfahrens stehen.

2. Werkzeug nach Anspruch 1, **dadurch gekennzeichnet, dass** das elektrische Schweißgewinde (9) mit Kunststoffen bedeckt ist.

3. Werkzeug nach Anspruch 1, **dadurch gekennzeichnet, dass** die Unterstützungsrollen (6) in Lagern in den unteren Ecken des Rahmens (8) getragen sind.

4. Werkzeug nach irgendeinem der vorherigen Ansprüche, **dadurch gekennzeichnet, dass** der Zugbolzen (7) in den Rahmen (8) eingeschraubt ist, und drehbar in der Brücke (4) befestigt ist, welche durch Drehen des Zugbolzens (7) angeordnet wird, um entlang des Rahmens (8) bewegt zu werden, und durch ihn geführt zu werden.

5. Werkzeug nach irgendeinem der Ansprüche 1 bis 3, **dadurch gekennzeichnet, dass** der Zugbolzen (7) drehbar im Rahmen (8) befestigt und in der Brücke (4) eingeschraubt ist, welche durch Drehen des Zugbolzens (7) angeordnet wird, um entlang des Rahmens (8) bewegt und durch ihn geführt zu werden.

6. Werkzeug nach irgendeinem der vorherigen Ansprüche, **dadurch gekennzeichnet, dass** die Enden des elektrischen Schweißgewindes (9) die Hülse (2) durch den Schlitz in der Hülse (2) verlassen, und so angeordnet sind, um direkt mit einer elektrischen Quelle verbunden zu werden.

7. Werkzeug nach irgendeinem der vorherigen Ansprüche, **dadurch gekennzeichnet, dass** der Verschlussmechanismus (5) einen sich aufwärts verjüngenden keilförmigen Körper (5a) umfasst, der als ein integriertes Teil der Brücke (4) angeordnet ist, wobei der Körper (5a) mit einem sich abwärts verjüngenden keilförmigen Körper (5b) zusammenwirkt, der durch eine Federlast auf der Brücke (4) befestigt ist, wobei die keilförmigen Körper (5a, 5b) gegeneinander gepresst werden, und die Klemmstreifen (3) zwischen einander sperren.

8. Werkzeug nach Anspruch 7, **dadurch gekennzeichnet, dass** ein Knopf (8a) vertikal unter dem federbelasteten keilförmigen Körper (5b) angeordnet ist, wobei durch den Knopf (8a) der federbelastete keilförmige Körper (5b) angeordnet ist, um in Kontakt zu treten, wenn die Brücke (4) mittels des Zugbolzens (7) abwärts bewegt wird, wobei die keilförmigen Körper (5a, 5b) voneinander weggedrückt werden, und der Klemmstreifen (3) befreit wird.

## Revendications

1. Outil pour électrofusion d'un manchon (2) et d'un tuyau (1) en matière plastique soudable comprenant un outil de serrage pour presser un manchon fendu axialement (2)-autour d'un tuyau (1) entouré par un fil de soudage (9) conducteur d'électricité, lequel fil de soudage (9) est agencé pour fournir une chaleur de soudage à la matière plastique, grâce à quoi l'outil de serrage est pourvu d'une courroie de serrage flexible (3) destinée à être menée en une boucle autour dudit manchon (2) et ayant une extrémité fixée rigidement à un pont (4) monté, de manière amovible, dans le châssis de l'outil, et dont l'autre extrémité peut être fixée au même pont (4) au moyen d'un mécanisme de verrouillage (5) permettant à la courroie de serrage (3) de se déplacer librement dans une direction pour ajuster la longueur de la boucle à la périphérie du manchon (2) et bloquer le déplacement de la courroie de serrage (3) dans le sens inverse afin de permettre la production d'une force de tension dans la boucle, lorsque ledit pont (4), au moyen d'un boulon de tension (7) agissant entre le châssis (8) de l'outil et le pont (4), est agencé pour être déplacé dans une direction radialement éloignée du manchon (2) simultanément au repos de l'outil contre ledit manchon (2), **caractérisé en ce que** l'outil le plus bas à la base du châssis (8), est pourvu de deux rouleaux de support (6) éloignés l'un de l'autre, entre lesquels rouleaux ladite courroie de serrage (3) est menée et lesquels rouleaux de support (6) sont agencés pour être en contact avec le manchon (2) sur chaque côté de la fente s'étendant axialement dudit manchon (2) durant l'opération d'électrofusion.

2. Outil selon la revendication 1, **caractérisé en ce que** le fil de soudage électrique (9) est recouvert de matière plastique.

3. Outil selon la revendication 1, **caractérisé en ce que** les rouleaux de support (6) sont supportés dans des paliers aux coins inférieurs du châssis (8).

4. Outil selon l'une quelconque des revendications précédentes, **caractérisé en ce que** le boulon de tension (7) est vissé dans le châssis (8) et monté rotatif dans le pont (4), qui en faisant tourner le boulon de tension (7) est agencé pour être déplacé le long du châssis (8) et être guidé par celui-ci.

5. Outil selon l'une quelconque des revendications 1 à 3, **caractérisé en ce que** le boulon de tension (7) est monté rotatif dans le châssis (8) et vissé dans le pont (4), qui en faisant tourner le boulon de tension (7) est agencé pour être déplacé le long du châssis (8) et être guidé par celui-ci.

6. Outil selon l'une quelconque des revendications précédentes, **caractérisé en ce que** les extrémités du fil de soudage électrique (9) quittent le manchon (2) via la fente dans ledit manchon (2) et sont agencées pour être reliées directement à une source électrique.

7. Outil selon l'une quelconque des revendications précédentes, **caractérisé en ce que** le mécanisme de verrouillage (5) comprend un corps en forme de coin s'effilant vers le haut (5a) agencé en tant que partie intégrante du pont (4), lequel corps (5a) coopère avec un corps en forme de coin s'effilant vers le bas (5b) monté, chargé par ressort, sur le pont (4), lesquels corps en forme de coin (5a, 5b) sont pressés l'un contre l'autre et verrouillent la courroie de serrage (3) entre eux.

8. Outil selon la revendication 7, **caractérisé en ce qu'**un bouton (8a) est agencé verticalement sous le corps en forme de coin chargé par ressort (5b), avec lequel bouton (8a) ledit corps en forme de coin chargé par ressort (5b) est agencé pour venir en contact, lorsque le pont (4) est déplacé vers le bas au moyen du boulon de tension (7), grâce à quoi les corps en forme de coin (5a, 5b) sont poussés à l'écart l'un de l'autre et la courroie de serrage (3) est libérée.
